# EUROPÄISCHE PATENTANMELDUNG

(11) **EP 4 703 164 A1**
(43) Veröffentlichungstag der Anmeldung: **04.03.2026**
(21) Anmeldenummer: 25000085.8
(22) Anmeldetag: 19.08.2025
(51) Int. Cl.: B60J 3/02

(54) **ZUSATZ-SONNENBLENDE FÜR KRAFTFAHRZEUGE**

(30) Priorität: 01.09.2024 DE 102024001771; 01.05.2025 DE 102025001742
(71) Anmelder: Klein, Walter, 76669 Bad Schönborn (DE)
(72) Erfinder: Klein, Walter, 76669 Bad Schönborn (DE)

(57) **Zusammenfassung**

Vorgeschlagen wird eine Blendenvorrichtung (2), die zu einer lösbaren Anbringung an einem Kraftfahrzeug (1) ausgebildet ist, aufweisend:
- eine Halteeinrichtung (10) zum Befestigen der Blendenvorrichtung (2) an dem Kraftfahrzeug (1), und
- eine Verschattungseinrichtung (11), die, wenn sie in eine Arbeitsposition zwischen einem Fahrzeugführer (6) des Kraftfahrzeuges (1) und einer Frontscheibe (5a, 5b) des Kraftfahrzeuges (1) gebracht wird, dazu ausgebildet ist, einen Teil der auf einen Fahrer des Kraftfahrzeuges (1) treffenden Strahlung, insbesondere Licht, abzuschatten, wobei die Verschattungseinrichtung (11) einen optischen Transmissionsgrad von im Wesentlichen Null aufweist,
wobei die Halteeinrichtung (10) und die Verschattungseinrichtung (11) in der Arbeitsposition, in einer variierbaren räumlichen Lage zueinander, lösbare miteinander verbunden sind.

## Beschreibung

Die Erfindung betrifft eine Blendenvorrichtung, die zu einer Anbringung an einer Sonnenblende oder einer Frontscheibe eines Kraftfahrzeugs ausgebildet ist, und ein Kraftfahrzeug.

Bei Kraftfahrzeugen ist es bekannt, vor allem an einem Dachhimmel des Fahrzeuges Sonnenblenden zu befestigen, die ggf. aus einer hoch geklappten Position, in der sie sich im Wesentlichen parallel zu dem Dachhimmel erstrecken, nach unten in eine Position, in der sie sich im Wesentlichen senkrecht zu dem Dachhimmel erstrecken, geschwenkt werden können. Zweck dieser Sonnenblenden ist es, den Fahrzeugführer und/oder den Beifahrer vor einer Blendung durch Lichtquellen, die in einem Blickbereich des Fahrzeugführers bzw. des Beifahrers befindlich sind oder in diesen strahlen, zu schützen.

Insbesondere schützt die herunterklappbare Sonnenblende vor einer Blendung durch die tiefstehende Sonne. Dabei gilt es jedoch aus sicherheitstechnischer Sicht, den Sichtbereich des Fahrzeugführers bzw. Beifahrers in den Straßenverkehrsraum nicht übermäßig einzuschränken, da ansonsten insbesondere sicherheitsrelevante Informationen des Straßenverkehrsraums nicht durch den Fahrer wahrgenommen werden könnten.

Die US 4,792,176 A beschreibt eine Zusatzblende, die an eine bestehende Sonnenblende eines Kraftfahrzeuges anbringbar ist. Diese Zusatzblende umfasst im Wesentlichen eine Fläche, deren Flächeninhalt in etwa dem der Sonnenblende entspricht, sowie drei Haltegriffe, die zu einer Verschiebung der Zusatzblende in horizontaler und vertikaler Richtung dienen. Die Zusatzsonnenblende besteht aus einem teilweise lichtdurchlässigen Material, so dass dem Fahrzeugführer die Sicht auf hinter der Zusatzblende gelegene Objekte nicht vollständig verwehrt ist. Die in der US 4,792,176 A offenbarte Vorrichtung ähnelt damit dem Funktionsprinzip einer Sonnenbrille. Auf der einen Seite lässt sich damit jedoch eine Blendung durch lichtintensive Lichtquellen wie die Sonne nicht gänzlich verhindern. Auf der anderen Seite führt die Abdunkelung des Sichtbereichs des Fahrzeugführers zu einer Verringerung der vom Fahrzeugführer im Straßenverkehrsraum wahrnehmbaren Kontraste. Damit stellt eine solche Vorrichtung, wie sie in der US 4,792,176 A beschrieben ist, prinzipiell eine Gefährdung des Fahrzeugführers dar.

Aus der DE 100 15 716 A1 ist eine Sonnenblende mit ausziehbaren und schwenkbaren Zusatzblenden bekannt, welche über drei Zusatzblenden verfügt, die um verschiedene Achsen rotierbar sind und in den Gesichtsbereich des Fahrzeugführers eines Kraftfahrzeuges gedreht werden können. Die Zusatzblenden können dabei aus Pappe, Leder oder einem Kunststoff sein. Zusatzblenden, wie sie in der DE 100 15 716 A1 offenbart sind, bieten einen wirksamen Schutz gegen Blendung durch Lichtquellen im Blickbereich des Fahrzeugführers. Allerdings wird, durch die Großflächigkeit der Zusatzblenden bedingt, ein Großteil des Sichtbereichs des Fahrzeugführers durch die Zusatzblenden versperrt, so dass unter Umständen sicherheitsrelevante Objekte im Straßenverkehr nicht erkannt werden können. Zudem ist die hier offenbarte Lösung sehr kompliziert und für den Straßenverkehr schwer zuzulassen.

Die US 4,736,979 A offenbart eine Zusatzblende für eine Sonnenschutzblende eines Kraftfahrzeugs.

Aus der US 5,662,370 A ist eine segmentierte Zusatzblende für eine Sonnenschutzblende eines Kraftfahrzeuges bekannt.

Die US 2,685,336 A zeigt eine Sonnenschutzblende für ein Kraftfahrzeug.

Die DE 100 15 716 A1 offenbart eine Sonnenblende für ein Kraftfahrzeug mit ausziehbaren und drehbaren Zusatzblenden.

In der DE 10 2016 100 686 A1 wird eine Zusatzsonnenblende mit einem ersten Mittenblendenabschnitt und einem zweiten Mittenblendenabschnitt offenbart, die in einem Einbauzustand der Zusatzsonnenblende in einem Abstand, bezogen auf eine Längsachse der Sonnenblende, zueinander anordenbar sind.

Der Erfindung liegt die Aufgabe zugrunde, eine Blendenvorrichtung zur Anbringung an einer Sonnenblende oder einer Frontscheibe eines Kraftfahrzeuges anzugeben, die eine verbesserte Abschattung einer auf einen Fahrer des Fahrzeuges treffenden Strahlung ermöglicht, ohne dabei die Sicht des Fahrers signifikant zu beeinträchtigen.

Die zuvor formulierte Aufgabe wird durch eine Blendenvorrichtung mit den Merkmalen des Anspruchs 1 gelöst. Zudem wird die Aufgabe durch ein Kraftfahrzeug mit den Merkmalen des Anspruchs 11 und 12 gelöst. Vorteilhafte Weiterbildungen der Erfindung sind Gegenstand der abhängigen Ansprüche.

Eine erfindungsgemäße Blendenvorrichtung ist zu einer lösbaren Anbringung an einem Kraftfahrzeug ausgebildet. Die Blendenvorrichtung weist eine Halteeinrichtung zum Befestigen der Blendenvorrichtung an dem Kraftfahrzeug und eine Verschattungseinrichtung auf, die, wenn sie in eine Arbeitsposition zwischen einem Fahrzeugführer des Kraftfahrzeuges und einer Frontscheibe des Kraftfahrzeuges gebracht wird, dazu ausgebildet ist, einen Teil der auf einen Fahrer des Kraftfahrzeuges treffenden Strahlung, insbesondere Licht, abzuschatten, wobei die Verschattungseinrichtung einen optischen Transmissionsgrad von im Wesentlichen Null aufweist, wobei die Halteeinrichtung und die Verschattungseinrichtung in der Arbeitsposition, in einer variierbaren räumlichen Lage zueinander, lösbar miteinander verbunden sind.

Ein Kraftfahrzeug ist ein motorisiertes Fahrzeug, das zur Fortbewegung auf Straßen oder anderen öffentlichen Verkehrswegen bestimmt ist, von einem Motor angetrieben wird und Platz für mindestens eine Person bietet. Beispiele für Kraftfahrzeuge sind Personenkraftwagen (PKW) oder Lastkraftwagen (LKW).

Eine Sonnenblende ist ein Teil des Kraftfahrzeugs, der dazu dient, die blendende Wirkung der Sonne auf den Fahrer oder die Insassen zu reduzieren, indem sie einen Teil der einfallenden Strahlung abschattet. Bei der Strahlung handelt es sich dabei insbesondere um eine Strahlung im infraroten, im ultravioletten und im sichtbaren Bereich (Licht).

Eine Frontscheibe ist die vordere Glasscheibe eines Kraftfahrzeugs, die den Innenraum vom Außenbereich trennt und dem Fahrer die Sicht nach vorne ermöglicht.

Die Sonnenblende ist normalerweise im Bereich einer Innenseite der Windschutzscheibe angebracht und kann oftmals auch zu den Seitenfenstern bewegt (durch eine Drehbewegung) werden. Die Sonnenblende kann aus einem meist rechteckigen oder halbrunden lichtundurchlässigen Material bestehen. Die Sonnenblende kann in verschiedenen Positionen eingestellt werden, um das Sonnenlicht abzuschirmen und so die Sicht und den Komfort während der Fahrt zu verbessern. Oft ist die Sonnenblende auch mit einem Spiegel ausgestattet, der es dem Fahrer ermöglicht, den Verkehr hinter sich zu beobachten.

Es wurde erkannt, dass speziell bei einer tiefstehenden Sonne am Morgen oder am Abend die Abschattungswirkung der im Kraftfahrzeug bereits vorhandenen Sonnenblende (im Fall eines PKW) oder Rollos (im Fall eines LKW oder eines Busses) nicht ausreichend ist. Dies kann zu einer bedeutenden Reduzierung der Sehleistung des Fahrzeugführers und damit letztendlich zu großen Sicherheitsrisiken beim Bedienen des Kraftfahrzeuges führen.

Die erfindungsgemäße Blendenvorrichtung lässt sich an der bereits vorhandenen Sonnenblende oder an der Frontscheibe des Kraftfahrzeuges einfach befestigen und verfügt über eine Verschattungseinrichtung, die in einer Arbeitsposition zwischen einer Ebene des Fahrzeugführers und der Frontscheibe (der Windschutzscheibe) des Kraftfahrzeuges angeordnet ist, d.h. wenn die Blendenvorrichtung an der Sonnenblende oder der Frontscheibe befestigt ist. Dort schattet sie die einstrahlende Sonne oder andere Strahlungsquellen effizient ab, ohne dass der Fahrzeugführer übermäßig in seiner Sicht eingeschränkt werden würde.

Der Kraftfahrzeugführer muss die erfindungsgemäße Blendenvorrichtung nur an einer Position an der Frontscheibe oder an der Sonnenblende anbringen. Diese Positionierung der Blendenvorrichtung stellt zuerst eine grobe Justage der Blendenvorrichtung dar. Durch die Variierbarkeit der Lage der Verschattungseinheit relativ zur Halteeinheit kann der Fahrzeugführer die Blendenvorrichtung grundlegend seinen Bedürfnissen anpassen. Eine weitere Feinjustage der Position der Blendenvorrichtung während der Fahrt ist für den Fahrzeugführer nicht notwendig: Durch eine Kopfbewegung von maximal etwa 10 cm nach links oder rechts (in Bezug auf die Fahrtrichtung des Kraftfahrzeuges) kann der Fahrzeugführer einfach und effizient die Verschattungseinheit zwischen Sonne und Augen bringen, um die Sonne auszublenden. Die Blendenvorrichtung kann also, muss aber nicht während der Fahrt verschoben werden, der Fahrer passt sich durch geringfügige Bewegungen an den Stand der Sonne an. Ein großer Vorteil hierbei ist, dass die Sichtbarkeit der Straße weiterhin gewährleistet ist und durch die geringfügigen Anpassungsbewegungen des Fahrzeugführers nicht beeinträchtigt wird.

Es ist anzumerken, dass die Sonne stets über dem Horizont steht. Selbst wenn die erfindungsgemäße Blendenvorrichtung bis zum Horizont (von den Augen des Fahrzeugführers aus gesehen) nach unten positioniert wird, kommt es zu keiner erwähnenswerten Einschränkung der Sicht auf die Fahrbahn durch die Verschattungseinheit bzw. die gesamte Blendenvorrichtung.

Die erfindungsgemäße flexible Positionierung der Verschattungseinrichtung ermöglicht zusammenfassend eine optimale Abschattung von Blendlicht (insbesondere dasjenige der Sonne) und gewährleistet gleichzeitig die sichere Erkennung aller verkehrsrelevanten Informationen. Zudem lässt sich die Blendenvorrichtung sicher und flexibel am Kraftfahrzeug befestigen.

Die Verschattungseinrichtung kann in einer Ebene, die orthogonal zu der Fahrtrichtung des Kraftfahrzeuges verläuft, eine Breite von 100 bis 120 mm und eine Höhe von 30 bis 40 mm aufweisen. Es wurde erkannt, dass die Verschattungseinrichtung speziell in der Höhe entsprechend klein gestaltet werden kann (inklusive eines Sicherheitsbereiches um die Fläche der Sonne herum), um die Beeinträchtigung des Sichtbereichs des Fahrzeugführers möglichst gering zu gestalten.

Diese Dimensionierung bietet einen effektiven Blendschutz, ohne dabei zu viel vom Sichtfeld des Fahrers zu verdecken. Die angegebene Größenspanne ermöglicht zudem eine Anpassung an verschiedene Fahrzeugtypen und Frontscheibengrößen.

Die Verschattungseinheit weist einen optischen Transmissionsgrad Null auf, ist also lichtundurchlässig. Dies gewährleistet einen effektiven Schutz vor Blendung und verbessert so die Sicherheit und den Fahrkomfort.

Die Halteeinrichtung kann dazu ausgebildet sein, als Saugnapf zu wirken, um die Halteeinheit mittels Unterdruck an der Frontscheibe des Kraftfahrzeuges zu halten. Die Saugnapf-Befestigung ermöglicht eine einfache und rückstandslose Montage und Demontage der Blendenvorrichtung an der Frontscheibe und bietet eine zuverlässige Haltekraft ohne Beschädigung der Fahrzeugoberfläche.

Die Halteeinrichtung kann einen elastischen Teil, der dazu ausgebildet ist, als Saugnapf zu wirken, und einen starren Teil, der dazu ausgebildet ist, als Halter für die Verschattungseinrichtung zu wirken, umfassen. Der elastische Teil ermöglicht dabei die Saugnapfwirkung für die Anbringung an der Frontscheibe, während der starre Teil eine präzise Positionierung der Verschattungseinheit erlaubt. Die Kombination aus elastischem und starrem Teil gewährleistet sowohl eine flexible Anpassung an die Frontscheibenoberfläche als auch eine stabile Halterung für die Verschattungseinrichtung.

Die Halteeinrichtung kann einen ersten Teil aufweisen, der als Klemmeinrichtung ausgebildet ist, die durch eine Klemmung der Sonnenblende des Kraftfahrzeuges eine Haltekraft erzeugt, die die Blendenvorrichtung an der Sonnenblende hält, und die Halteeinrichtung kann einen zweiten Teil aufweisen, der dazu ausgebildet ist, als Halter für die Verschattungseinrichtung zu wirken.

Die Klemmenbefestigung an der Sonnenblende nutzt bereits vorhandene Fahrzeugkomponenten und ermöglicht eine sichere Befestigung ohne zusätzliche Befestigungspunkte am Fahrzeug.

Der erste Teil der Halteeinrichtung kann an einer Kontaktfläche mit der Sonnenblende des Kraftfahrzeuges eine raue Oberflächenstruktur aufweisen, vorzugsweise eine periodische, rampenförmige Oberflächenstruktur. Die raue Oberflächenstruktur erhöht die Reibung zwischen Halteeinrichtung und Sonnenblende und verhindert ein ungewolltes Verrutschen der Blendenvorrichtung während der Fahrt.

Die Position, in die die Verschattungseinrichtung relativ zu der Halteeinrichtung bringbar ist, kann entlang der Fahrtrichtung veränderbar sein. Die Verstellbarkeit entlang der Fahrtrichtung ermöglicht eine präzise Anpassung der Verschattungsposition an unterschiedliche Sonnenstände und Fahrergrößen für einen optimalen Blendschutz.

Die Verschattungseinrichtung kann gegenüber einer Ebene der Frontscheibe des Kraftfahrzeuges verschwenkbar sein. Die Schwenkbarkeit der Verschattungseinrichtung ermöglicht eine dreidimensionale Positionierung zur Abschattung von Lichtquellen aus verschiedenen Winkeln und erhöht die Anpassungsfähigkeit an unterschiedliche Fahrsituationen.

Wenigstens ein Teil der Verschattungseinrichtung kann in einer Ebene der Blendenvorrichtung, welche orthogonal zu der Fahrtrichtung des Kraftfahrzeuges verläuft, relativ zu der Halteeinrichtung horizontal und vertikal verschiebbar sein. Die horizontale und vertikale Verschiebbarkeit ermöglicht eine präzise Positionierung der Verschattungseinrichtung im Sichtfeld des Fahrers und gewährleistet eine optimale Abdeckung der Lichtquelle bei minimaler Sichtbeeinträchtigung.

Die Verschattungseinrichtung kann einen ersten Teil, der mit der Halteeinrichtung verbindbar ist, und einen zweiten Teil aufweisen, wobei der zweite Teil gegenüber dem ersten Teil in der Ebene der Blendenvorrichtung, welche orthogonal zu der Fahrtrichtung des Kraftfahrzeuges verläuft, horizontal verschiebbar ist. Die mehrteilige Verschattungseinrichtung mit verschiebbarem zweitem Teil ermöglicht eine an äußere Bedingungen anpassbare Abschattungsfläche bei Bedarf.

Die Halteeinrichtung und/oder die Verschattungseinrichtung kann aus einem Kunststoff gefertigt sein. Die Kunststofffertigung gewährleistet ein geringes Gewicht der Blendenvorrichtung und ermöglicht eine kostengünstige Herstellung bei gleichzeitig ausreichender mechanischer Stabilität.

Die zuvor formulierte Aufgabe wird zudem gelöst durch ein Kraftfahrzeug mit einer Frontscheibe und mit einer an der Frontscheibe angebrachten Blendenvorrichtung. Die Integration der Blendenvorrichtung in das Kraftfahrzeug verbessert die Fahrsicherheit durch reduzierten Blendeffekt und erhöht den Fahrkomfort bei schwierigen Lichtverhältnissen.

Die zuvor formulierte Aufgabe wird zudem gelöst durch ein Kraftfahrzeug mit einer Sonnenblende und mit einer an der Sonnenblende angebrachten Blendenvorrichtung. Die Kombination der Blendenvorrichtung mit der vorhandenen Sonnenblende erweitert den Funktionsumfang des Blendenvorrichtung und nutzt bereits vorhandene Befestigungsmöglichkeiten im Fahrzeug.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird.

Es zeigen:
- FIG 1: ein Kraftfahrzeug mit einer erfindungsgemäßen Blendenvorrichtung in einer schematischen Schnittzeichnung;
- FIG 2: eine perspektivische Ansicht einer ersten Ausführungsform der Blendenvorrichtung;
- FIG 3: eine weitere perspektivische Ansicht der ersten Ausführungsform der Blendenvorrichtung;
- FIG 4: eine perspektivische Ansicht einer zweiten Ausführungsform der Blendenvorrichtung;
- FIG 5: eine weitere perspektivische Ansicht der zweiten Ausführungsform der Blendenvorrichtung;

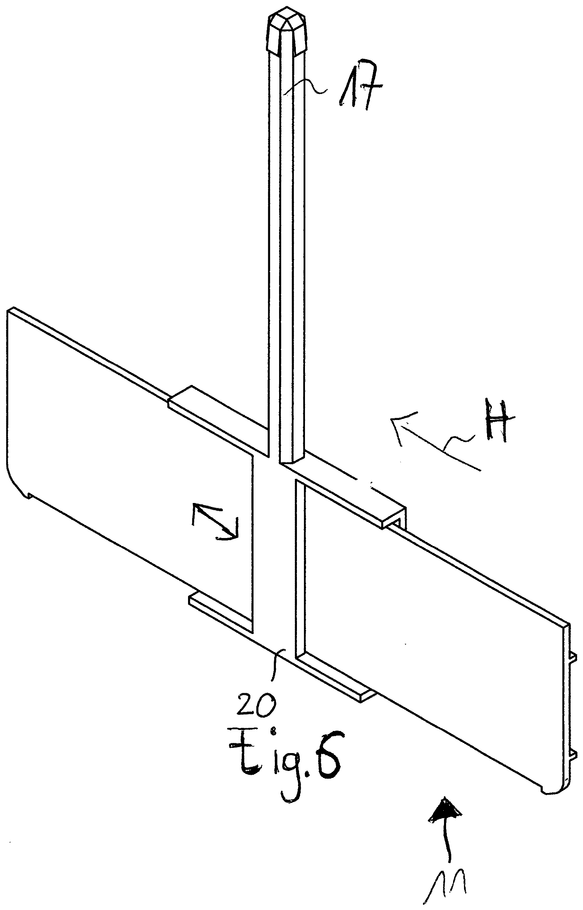

- FIG 6: eine perspektivische Ansicht einer Verschattungseinrichtung gemäß einem ersten Aspekt;
- FIG 7: eine perspektivische Ansicht einer Verschattungseinrichtung gemäß einem zweiten Aspekt;
- FIG 8: eine perspektivische Ansicht einer Verschattungseinrichtung gemäß einem dritten Aspekt;
- FIG 9: eine perspektivische Ansicht einer Verschattungseinrichtung gemäß einem vierten Aspekt;
- FIG 10: eine Sicht eines Fahrzeugführers aus einem Bus oder Lastkraftwagen;
- FIG 11: eine Sicht eines Fahrzeugführers aus einem Personenkraftwagen; und
- FIG 12: eine perspektivische Ansicht einer dritten Ausführungsform der Blendenvorrichtung.

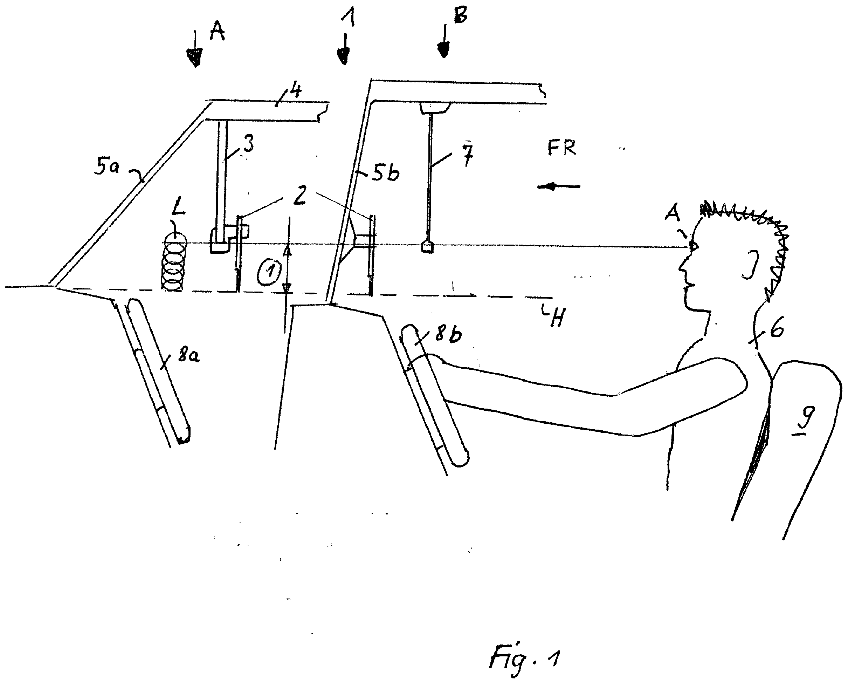

FIG 1 zeigt einen vorderen Bereich eines Kraftfahrzeuges 1 in einem Längsschnitt. In einem linken Bereich A von FIG 1 ist das Kraftfahrzeug als Personenkraftwagen (PKW), in einem rechten Bereich B als Lastkraftwagen (LKW) ausgebildet. Zu erkennen ist jeweils eine erfindungsgemäße Blendenvorrichtung 2.

Im linken Bereich A ist die Blendenvorrichtung 2 an einer Sonnenblende 3 des Kraftfahrzeuges angeordnet ist. Die Sonnenblende 2 ist mit dem Dachhimmel 4 des Fahrzeuges schwenkbar verbunden. Die Sonnenblende 3 und die Blendenvorrichtung 2 sind zwischen einer Frontscheibe 5a des Kraftfahrzeuges und einem Auge A eines Fahrzeugführers 6 angeordnet.

Im rechten Bereich B ist die Blendenvorrichtung 2 an einer Frontscheibe 5b des Lastkraftwagens angeordnet. Die Blendenvorrichtung 2 ist hier unabhängig von einem Rollo 7 des Lastkraftwagens. Weiterhin ist in FIG 1 schematisch ein jeweiliges Lenkrad 8a, 8b und der Fahrzeugführer 6 dargestellt. Der Fahrzeugführer 6 befindet sich auf einem Fahrersitz 9.

Die Sonnenblende 3 bzw. das Rollo 7 und die Blendenvorrichtung 2 haben die Aufgabe, den Fahrzeugführer 6, insbesondere dessen Augen A, vor einer Blendung durch eine Lichtquelle L zu schützen, die in einer Blickrichtung des Fahrzeugführers 6, also in Fahrtrichtung FR des Kraftfahrzeuges 1, befindlich ist (in FIG 1 ist sie nur zur besseren Veranschaulichung innerhalb des Kraftfahrzeuges 1 dargestellt, in Wirklichkeit ist die Lichtquelle L, insbesondere die Sonne, außerhalb des Kraftfahrzeuges 1 befindlich

Die in FIG 1 dargestellte Lichtquelle L steht derart tief am Horizont H, dass ihre Strahlung bei einer reinen Nutzung der konventionellen Sonnenblende 3 bzw. des Rollos 7 des Fahrzeuges 1 in das Auge A des Fahrzeugführers 6 gelangen würde. Durch das Anbringen der Blendenvorrichtung 2 können die Verschattungseinrichtung der Blendenvorrichtung (vgl. nachfolgende Zeichnungen) in einen Bereich (durch eine umkreiste "1" gekennzeichnet) zwischen der Lichtquelle L und den Augen A des Fahrzeugführers 6 gebracht werden, wodurch die Verschattungseinrichtung den relevanten Teil der von der Lichtquelle L ausgesandten Strahlung abhält, was in FIG 1 schematisch dargestellt ist.

Die Blendenvorrichtung 2 ist dazu ausgebildet und vorgesehen, nur so weit in den Blickbereich des Fahrzeugführers 6 gebracht zu werden, dass nur der Bereich oberhalb des Horizonts H (wie in FIG 1 dargestellt) verschattet wird. Alle für den Fahrbetrieb relevanten Informationen befinden sich aber unterhalb des Horizonts, so dass die erfindungsgemäße Blendenvorrichtung 2 keine Sichtbeeinträchtigung mit sich bringt.

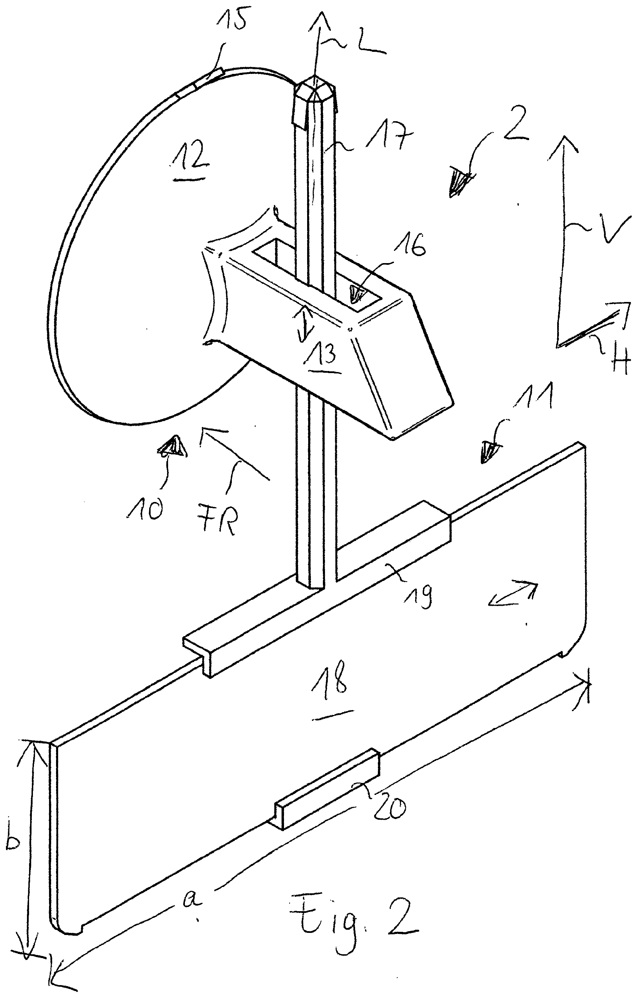

In FIG 2 ist ein erste Ausführungsform einer Blendenvorrichtung 2 in einer perspektivischen Ansicht dargestellt. Diese Ausführungsform ist besonders für den Einsatz in einem Lastkraftwagen oder einem Bus geeignet. Die Blendenvorrichtung 2 umfasst eine Halteeinrichtung 10 und eine Verschattungseinrichtung 11. Die Halteeinrichtung 10 ist, wie die gesamte Blendenvorrichtung 2, aus einem Kunststoff gefertigt.

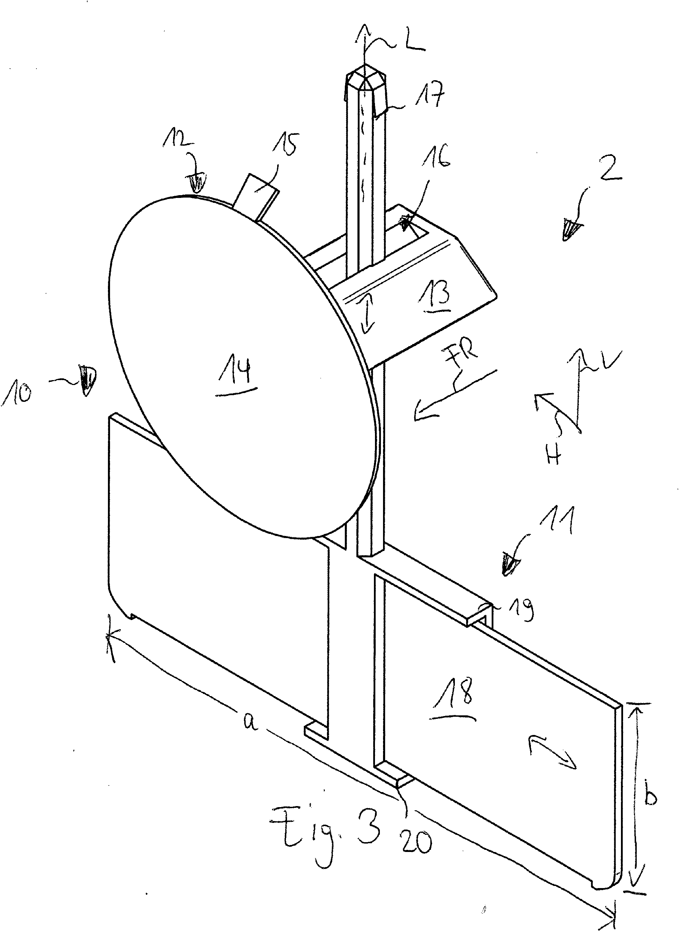

Die Halteeinrichtung 10 weist einen elastischen Teil 12 und einen starren Teil 13 auf. Der elastische Teil 12 ist aus einem lichtdurchlässigen Kunststoff mit einem Transmissionsgrad von über 99% gefertigt und ist dazu ausgebildet, als Saugnapf zu wirken. Hierzu weist er auf der Seite zur Frontscheibe 5b hin einen Hohlraum 14 auf (vgl. FIG 3). Der elastische Teil 12 ist also nach Art einer konvexen Linse ausgebildet. In an sich bekannter Weise lässt sich der elastische Teil 12 beim Befestigen der Blendenvorrichtung 2 an der Frontscheibe 5b gegen die Frontscheibe 5b drücken und komprimieren. Dabei entweicht die Luft aus dem Hohlraum 14 zwischen der Frontscheibe 5b und dem elastischen Teil 12 und es entsteht ein Unterdruck in dem Hohlraum 14. Dieser Unterdruck bzw. der Luftdruck der umgebenden Luft hält den elastischen Teil 12 und damit die Halteeinrichtung 10 an der Frontscheibe 5b.

Zum Lösen der Saugnapfverbindung weist die Halteeinrichtung 10 eine Lasche 15 auf (vgl. hierzu auch FIG 3). Durch einen ausreichend starken Zug des Fahrzeugführers 6 an der Lasche 15 gelangt wieder, den Unterdruck ausgleichende Luft in den Hohlraum 14, wodurch sich die Halteeinrichtung 10 von der Frontscheibe 5b löst. Die Halteeinrichtung 10 kann, in Fig. 1 nicht dargestellte, zusätzliche Funktionalitäten aufweisen, um die Stärke der Saugnapfverbindung zu erhöhen. Beispielsweise kann ein Kunststoff zum Einsatz kommen, dessen Reibung an der Frontscheibe 5b besonders hoch ist. Auch können spezielle Hebelmechanismen oder Schraubverschlüsse zum Einsatz kommen, um den Luftdruck im Hohlraum 14 weiter abzusenken und dadurch die Saugnapfwirkung zu verstärken.

Der elastische Teil 12 und der starre Teil 13 der Halteeinrichtung 10 sind fest, d.h. unlösbar, miteinander verbunden, beispielsweise durch Verschmelzen der Kontaktflächen. Der starre Teil 13 ist aus einem nicht-elastischen, lichtdurchlässigen Kunststoff mit einem Transmissionsgrad von über 99% gefertigt und weist eine Ausnehmung 16 zur Aufnahme eines Haltestiftes 17 der Verschattungseinrichtung 11 auf.

Der Haltestift 17 wird vom Fahrzeugführer 6 in die Ausnehmung 16 (in FIG 2 und FIG 3 von unten) hineingeschoben und verharrt in dieser Position durch Haftreibung. Die Ausnehmung 16 ist so ausgestaltet, dass sich der Haltestift 17 in Fahrtrichtung FR in ihr bewegt und gegen eine Ebene E der Frontscheibe 5b gedreht werden kann. Die Ausnehmung 16 kann zusätzlich Rastanordnungen (nicht dargestellt) aufweisen, um die Halterung des Haltestiftes 17 zu verbessern.

Mit dem Haltestift 17 lösbar verbunden ist ein Blendenbereich 18 der Verschattungseinrichtung 11. Der Blendenbereich 18 und der Haltestift 17 sind aus einem lichtundurchlässigen Kunststoff gefertigt. Der Blendenbereich 18 wird durch Haltestege 19, 20 an dem Haltestift 17 gehalten.

In FIG 2 und FIG 3 ist zu erkennen, dass der Haltestift 17 und damit die gesamte Verschattungseinrichtung 11 in Fahrtrichtung FR verschiebbar anbringbar sind, da die Ausnehmung 16 in Form eines "Langlochs" ausgebildet ist. Diese Ausbildung der Ausnehmung 16 ermöglicht auch eine Schwenkbewegung des Haltestiftes 17 mit dem Blendenbereich 18 um eine Längsachse L des Haltestiftes 17 und in Fahrtrichtung FR. Zudem ist der Haltestift 17 mit dem Blendenbereich 18 so in etwa parallel zu einer Ebene E der Frontscheibe 5b vertikal entlang einer Vertikalachse V verschiebbar (nach oben oder nach unten). Der Blendenbereich 1 ist entlang einer Horizontalachse H horizontal (also nach links und rechts aus Sicht des Fahrzeugführers 6) verschiebbar. Hierdurch kann die Blendenvorrichtung 2 in höchstem Maß, aber dennoch einfach an die individuellen Bedürfnisse des Fahrzeugführers 6 angepasst werden.

Der Blendenbereich 18 der Verschattungseinrichtung 2 weist in den vorliegenden Ausführungsbeispielen eine Breite a von 110 mm und eine Höhe b von 35 mm auf. Eine Stärke des Blendenbereichs 18 liegt im Bereich von wenigen Millimetern.

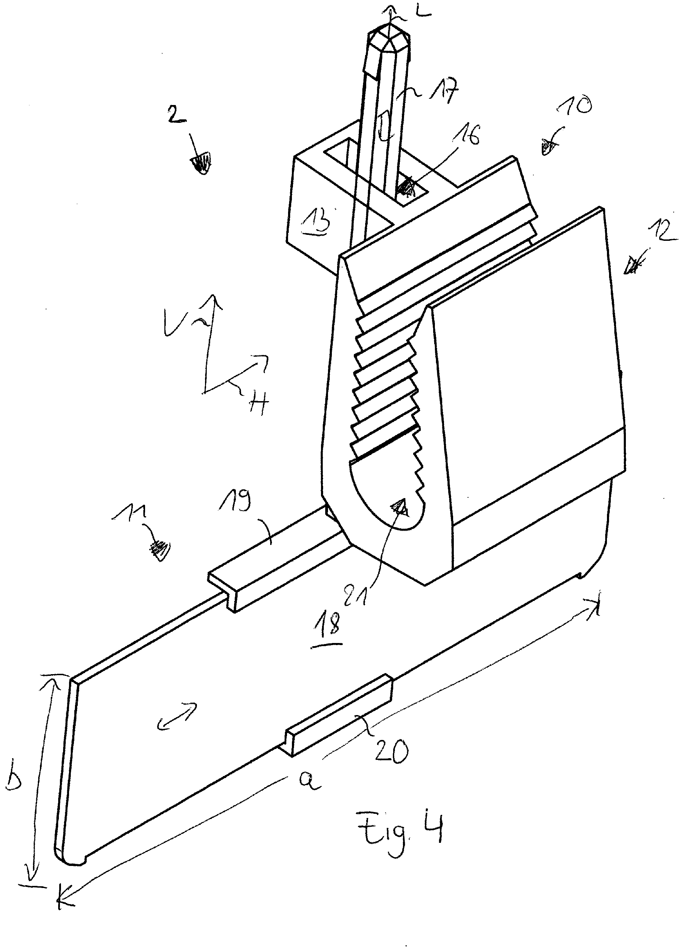

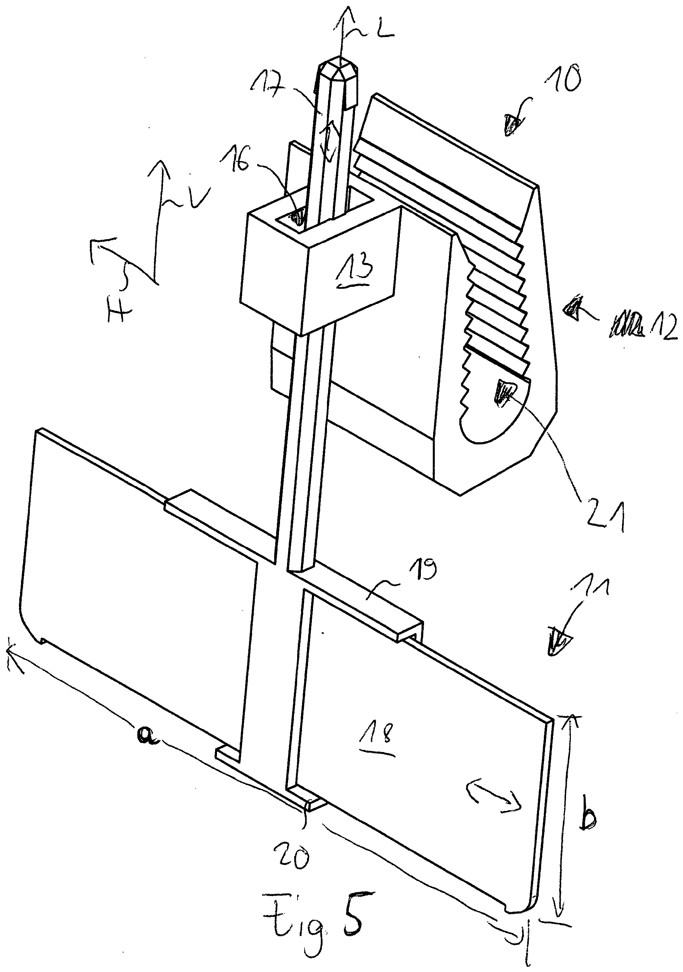

FIG 4 und FIG 5 zeigen ein zweites Ausführungsbeispiel einer erfindungsgemäßen Blendenvorrichtung 2, die zum Einsatz in einem Personenkraftwagen vorgesehen und ausgebildet ist.

Die Verschattungseinrichtung 11 ist identisch mit derjenigen der ersten Ausführungsform. Im Gegensatz zu der ersten Ausführungsform ist der erste, starre Teil 12 der Halteeinrichtung 10 als Klemmeinrichtung ausgebildet, die durch eine Klemmung der Sonnenblende 3 des Kraftfahrzeuges 1 eine Haltekraft erzeugt, die die Blendenvorrichtung 2 an der Sonnenblende 3 hält (vgl. FIG 1). An einer Kontaktfläche 21 mit der Sonnenblende 3 des Kraftfahrzeuges 1 weist die Klemmeinrichtung 12 eine raue, periodische, rampenförmige Oberflächenstruktur auf. Diese Oberflächenstruktur verbessert die Klemmwirkung der Klemmeinrichtung 12 und hält die Blendenvorrichtung 2 effizient an der Sonnenblende 3.

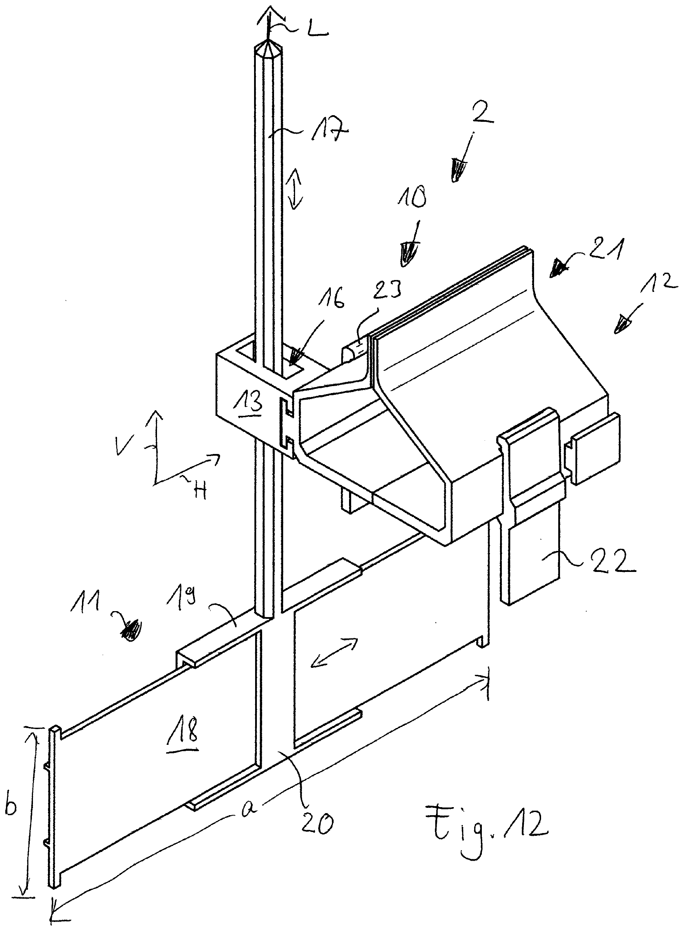

FIG 12 zeigt eine weitere Ausführungsform einer erfindungsgemäßen Blendenvorrichtung 2. Die Verschattungseinrichtung 11 ist wiederum identisch mit derjenigen der ersten und der zweiten Ausführungsform. Im Gegensatz zu der ersten Ausführungsform ist der erste, starre Teil 12 der Halteeinrichtung 10 wiederum als Klemmeinrichtung 12 ausgebildet, die durch eine Klemmung des Rollos 7 des als Lastkraftwagen oder Bus ausgebildeten Kraftfahrzeuges 1 eine Haltekraft erzeugt, die die Blendenvorrichtung 2 an dem Rollo 7 hält (vgl. FIG 1).

Die Klemmeinrichtung 12 weist zwei Klemmstege 22, 23 auf, bei deren Betätigung (durch Zusammendrücken in einem unteren Bereich in FIG 12) sich im Kontaktbereich 21 mit dem Rollo 7 des als Bus oder Lastkraftwagen ausgebildeten Kraftfahrzeuges 1 zwei Kontaktflächen 24, 25 auseinander bewegen, so dass die Klemmeinrichtung 12 (teilweise) über das Rollo 7 geführt werden kann. Durch das Loslassen der Klemmstege 22, 23 (nachdem die Klemmeinrichtung 12 über das Rollo 7 geführt wurde) streben die beiden Klemmstege 22, 23 wieder in Richtung ihrer ursprünglichen, in FIG 12 dargestellten Position. Hierdurch wird eine Klemmkraft auf das dann zwischen den beiden Kontaktflächen 24, 25 befindliche Rollo 7 ausgeübt, welche die Blendenvorrichtung 2 an dem Rollo 7 hält.

Durch die einfache Montage der Klemmeinrichtung 12 an dem Rollo 7 kann die Grobjustage der Blendenvorrichtung 2 einfach realisiert werden.

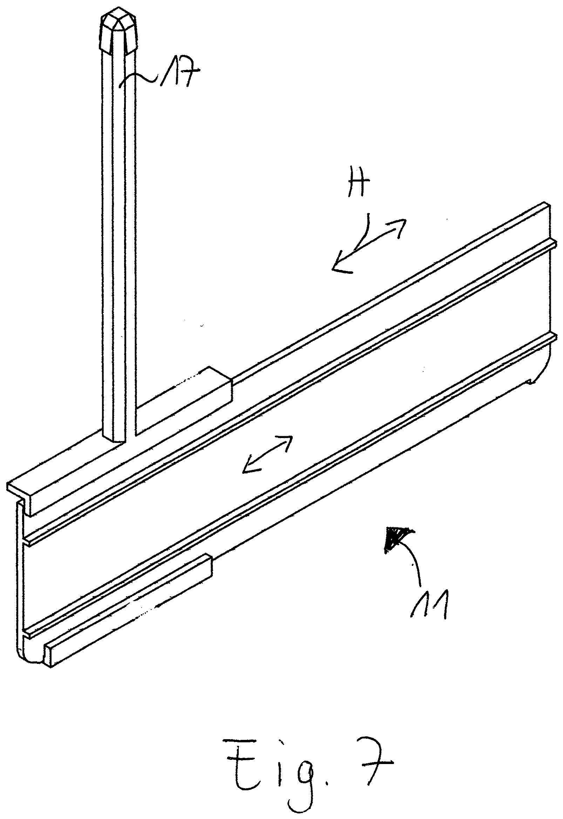

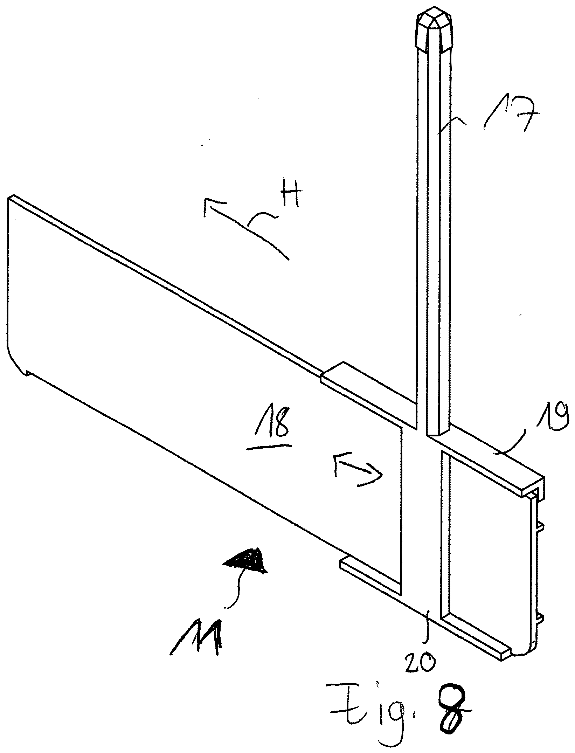

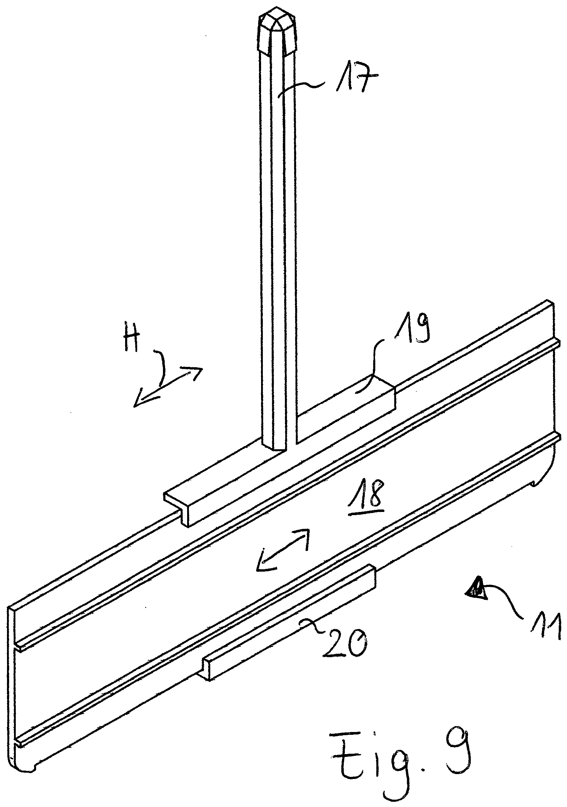

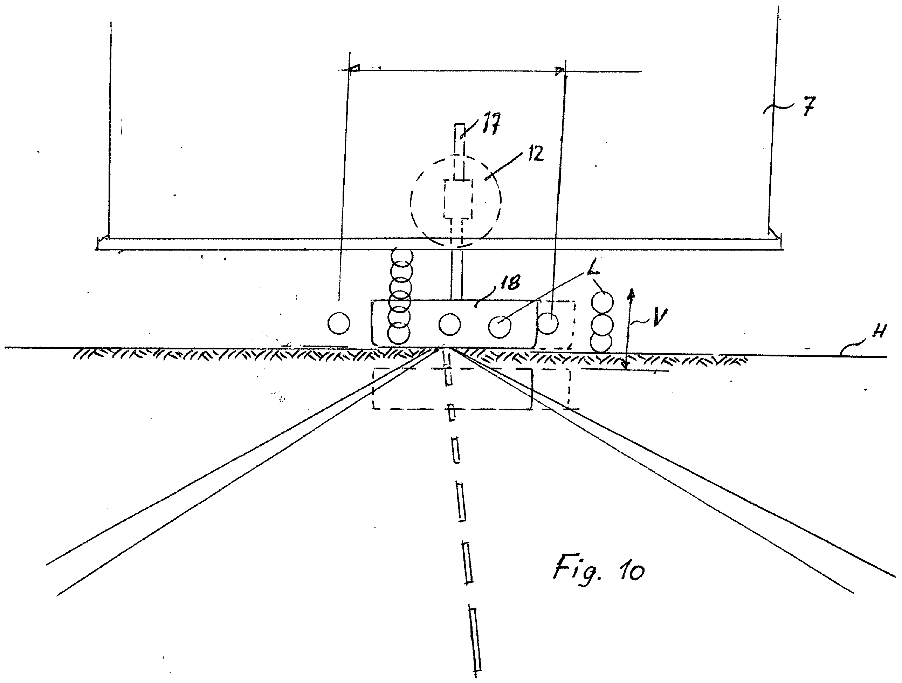

In den Figuren 7-10 ist die horizontale Verschiebemöglichkeit des Blendenbereichs 18 gegenüber dem Haltestift 17 dargestellt. FIG 7 und FIG 8 zeigen den Blendenbereich 18 in einer mittleren Position (jeweils von vorne und von hinten), während FIG 9 und FIG 10 eine deutliche seitliche Verschiebung (um mehrere Zentimeter) des Blendenbereichs 18 zeigen (jeweils von vorne und von hinten).

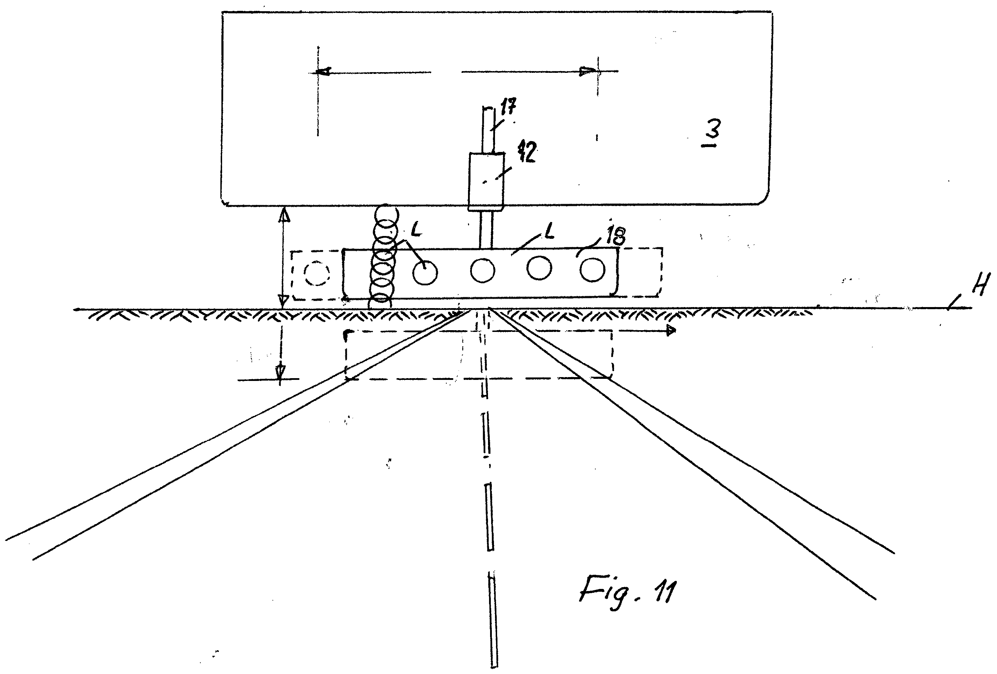

In FIG 11 ist eine Sicht des Fahrzeugführers 6 aus einem Bus oder Lastkraftwagen dargestellt. Der Saugnapf 12 der Blendenvorrichtung 2 ist in Fahrtrichtung FR (also in FIG 11 hinein) hinter dem Rollo 7 des Lastkraftwagens oder Busses angeordnet. Der Haltestift 17 kann nach oben oder unten bewegt werden, um den Blendenbereich 18 in die gewünschte Position zwischen Rollo 7 und dem Horizont H zu bringen.

Eine Position der Lichtquelle L (speziell der Sonne) ändert sich bei einer Kurvenfahrt, was in FIG 11 durch die horizontale Verschiebung der Lichtquelle L angedeutet ist. Der Blenden bereich 18 kann durch die horizontale Verschiebemöglichkeit entsprechend angepasst werden, um diesem Umstand Rechnung zu tragen. Bei Sonnenständen außerhalb der abgedeckten Bereiche (sehr weit links oder rechts) spricht man nicht mehr von Blendung, sondern von einer Komforteinschränkung, was jedoch akzeptabel ist.

Ein zu weites Herunterziehen des Blendenbereichs 18 in den Sichtbereich des Fahrzeugführers 6 unterhalb des Horizontes H würde eine Blendung durch die Lichtquelle L hervorrufen (da der Blendenbereich 18 entsprechend klein in seiner vertikalen Abmessung gewählt ist). Dies würde der Fahrzeugführer 6 automatisch vermeiden, weshalb eine Fehlbedienung der Blendenvorrichtung 2 (was eine Sichteinschränkung mit sich bringen würde) nahezu ausgeschlossen.

In FIG 12 ist eine analoge Sicht des Fahrzeugführers 6 aus einem Personenkraftwagen dargestellt.

## Patentansprüche

1. Blendenvorrichtung (2), die zu einer lösbaren Anbringung an einem Kraftfahrzeug (1) ausgebildet ist, aufweisend:
- eine Halteeinrichtung (10) zum Befestigen der Blendenvorrichtung (2) an dem Kraftfahrzeug (1), und
- eine Verschattungseinrichtung (11), die, wenn sie in eine Arbeitsposition zwischen einem Fahrzeugführer (6) des Kraftfahrzeuges (1) und einer Frontscheibe (5a, 5b) des Kraftfahrzeuges (1) gebracht wird, dazu ausgebildet ist, einen Teil der auf einen Fahrer des Kraftfahrzeuges (1) treffenden Strahlung, insbesondere Licht, abzuschatten, wobei die Verschattungseinrichtung (11) einen optischen Transmissionsgrad von im Wesentlichen Null aufweist,
wobei die Halteeinrichtung (10) und die Verschattungseinrichtung (11) in der Arbeitsposition, in einer variierbaren räumlichen Lage zueinander, lösbare miteinander verbunden sind.

2. Blendenvorrichtung (2) nach Anspruch 1, bei der die Halteeinrichtung (10) dazu ausgebildet ist, als Saugnapf (14) zu wirken, um die Halteeinrichtung (10) mittels Unterdruck an der Frontscheibe (5a) des Kraftfahrzeuges (1) zu halten.

3. Blendenvorrichtung (2) nach Anspruch 2, bei der die Halteeinrichtung (10) einen elastischen Teil (12), der dazu ausgebildet ist, als Saugnapf (14) zu wirken, und einen starren Teil (13), der dazu ausgebildet ist, als Halter für die Verschattungseinrichtung (11) zu wirken, umfasst.

4. Blendenvorrichtung (2) nach Anspruch 1, bei der die Halteeinrichtung (10) einen ersten Teil (12) aufweist, der als Klemmeinrichtung (12) ausgebildet, die durch eine Klemmung der Sonnenblende (3) des Kraftfahrzeuges (1) eine Haltekraft erzeugt, die die Blendenvorrichtung (2) an der Sonnenblende (3) hält, und bei der die Halteeinrichtung (10) einen zweiten Teil (13) aufweist, der dazu ausgebildet ist, als Halter für die Verschattungseinrichtung (11) zu wirken.

5. Blendenvorrichtung (2) nach Anspruch 4, bei der der erste Teil der Halteeinrichtung (10) an einer Kontaktfläche (21) mit der Sonnenblende (3) des Kraftfahrzeuges (1) eine raue Oberflächenstruktur aufweist, vorzugsweise eine periodische, rampenförmige Oberflächenstruktur.

6. Blendenvorrichtung (2) nach einem der vorangegangenen Ansprüche, bei der die Position, in die die Verschattungseinrichtung (11) relativ zu der Halteeinrichtung (10) bringbar ist, entlang der Fahrtrichtung (FR) veränderbar ist.

7. Blendenvorrichtung (2) nach einem der vorangegangenen Ansprüche, bei der die Verschattungseinrichtung (11) gegenüber einer Ebene der Frontscheibe (5a, 5b) des Kraftfahrzeuges (1) verschwenkbar ist.

8. Blendenvorrichtung (2) nach einem der vorangegangenen Ansprüche, bei der wenigstens ein Teil der Verschattungseinrichtung (11) in einer Ebene der Blendenvorrichtung (2), welche orthogonal zu der Fahrtrichtung des Kraftfahrzeuges (1) verläuft, relativ zu der Halteeinrichtung (10) horizontal und vertikal verschiebbar ist.

9. Blendenvorrichtung (2) nach einem der vorangegangenen Ansprüche, bei der die Verschattungseinrichtung (11) einen ersten Teil (17), der mit Halteeinrichtung (10) verbindbar ist, und einen zweiten Teil (18) aufweist, wobei der zweite Teil (18) gegenüber dem ersten Teil (17) in der Ebene der Blendenvorrichtung (2), welche orthogonal zu der Fahrtrichtung (FR) des Kraftfahrzeuges (1) verläuft, horizontal verschiebbar ist.

10. Blendenvorrichtung (2) nach einem der vorangegangenen Ansprüche, bei der die Halteeinrichtung (10) und/oder die Verschattungseinrichtung (11) aus einem Kunststoff gefertigt ist.

11. Kraftfahrzeug mit einer Frontscheibe und mit einer an der Frontscheibe (5a, 5b) angebrachten Blendenvorrichtung (2) gemäß einem der Ansprüche 1 oder 4 bis 10.

12. Kraftfahrzeug (1) mit einer Sonnenblende (3) und mit einer an der Sonnenblende (3) angebrachten Blendenvorrichtung (2) gemäß einem der Ansprüche 1 bis 3 oder 6 bis 10.
